# EUROPEAN PATENT SPECIFICATION

(11) **EP 4 437 629 B1**
(45) Date of publication and mention of the grant of the patent: **22.04.2026**
(21) Application number: 22879593.6
(22) Date of filing: 21.11.2022
(51) Int. Cl.: H02G 1/02, H02G 7/00

(54) **AN ILLUMINATED WARNING SPHERE**
LEUCHTENDE WARNKUGEL
SPHÈRE D'AVERTISSEMENT LUMINEUSE

(30) Priority: 23.11.2021 TR 202118328
(43) Date of publication of application: 02.10.2024
(73) Proprietor: Yildiz Teknik Universitesi, 34220 Istanbul (TR); Ege Universitesi, 35040 Bornova/Izmir (TR)
(72) Inventor: BAKAN, Ahmet Faruk, 34220 Esenler/Istanbul (TR); NAKIR, Ismail, 34220 Esenler/Istanbul (TR); AKCA, Hakan, Bornova/Izmir (TR); AYAZ, Ramazan, 34220 Esenler/Istanbul (TR)
(74) Representative: Kaya, Erdem
(86) International application number: PCT/TR2022/051320
(87) International publication number: WO 2023/096619

(56) References cited:
- WO-A1-02/058032
- CN-A- 108 320 410
- CN-U- 205 302 873
- KR-B1- 100 663 991

## Description

### TECHNICAL FIELD

The invention relates to an illuminated warning sphere that minimizes weather-related flight risks by illuminating power transmission lines.

### BACKGROUND

When it gets dark, the visibility of the energy transmission lines considerably decreases, and in some regions, vision becomes impossible. This makes the flight of aircraft such as airplanes and helicopters risky. Especially in dusty, foggy, cloudy, rainy, and windy weather conditions, energy transmission lines can be completely invisible. This increases the risk of possible accidents during the flight of the aircraft, especially during the low-level flight, landing, or take-off. In order to solve this problem, warning spheres are used to increase the visibility of energy transmission lines in the known state of the art. Warning spheres are usually installed on top of the wire shield of the uppermost conductor of the energy transmission lines positioned in the vicinity of military bases, police stations, helicopter routes, and other low-flight zones in the river, lake, fjord, valley, road, railway, construction site and pipelines over which cables are drawn to and near the airports, or on top of the top high-voltage towers.

In the state of the art, the said warning spheres comprise a phosphor reflector element to warn the aircraft. Although the warning sphere can stimulate the aircraft due to the said phosphor reflector element, the reflector element loses its functionality due to factors affecting the visibility of the surface such as fog, cloud, and dust. This causes the energy transmission lines to be completely invisible in dusty, foggy, cloudy, rainy, and windy weather conditions and thus increases flight risks.

In the state of the art, the said warning spheres may wear out over time depending on the weather conditions. An operator usually periodically performs the detection of worn warning spheres. However, this process takes time and prolongs the detection and renewal process.

All the above-mentioned problems have made it necessary to make an innovation in the relevant technical field as a result.

CN205302873U discloses a warning device designed as a hollow sphere structure whose front and back sides are respectively provided with two hemispherical assemblies and further comprises a power generation device, a lighting device, a storage battery and a storage battery control module.

### BRIEF DESCRIPTION OF THE INVENTION

The present invention relates to an illuminated warning sphere for eliminating the above-mentioned disadvantages and bringing new advantages to the relevant technical field.

The object of the present invention is to develop an illuminated warning sphere that minimizes weather-related flight risks by illuminating energy transmission lines.

Another object of the present invention is to develop an illuminated warning sphere that prevents accidents caused by aircraft that may occur in energy transmission lines. In this way, human safety is ensured and problems such as energy interruptions caused by the accident are eliminated.

Another object of the present invention is to develop an illuminated warning sphere that can be effectively seen under night and severe weather conditions.

Another object of the present invention is to develop an illuminated warning sphere that can be remotely monitored and reported for the effective detection and rapid response of any malfunction.

Another object of the present invention is to develop an illuminated warning sphere that can rotate around the wire and/or wire shield of the energy transmission line to which it is connected so that the warning light is visible to the aircraft.

Another object of the present invention is to provide an all-weather-resistant illuminated warning sphere.

In order to achieve all of the above-mentioned objects and those which will arise from the following detailed description, the present invention relates to an illuminated warning sphere for illuminating power transmission lines to minimize weather-related flight risks. The said illuminated warning sphere comprises at least one first semisphere, at least one second semisphere connected to the said first semisphere and at least one body comprising at least two holes mutually positioned to allow the first semisphere and the second semisphere to be attached to the wire of the energy transmission line when the first semisphere and the second semisphere are joined; at least one warning light on the first semisphere to emit light from the outer surface of the said first semisphere to the environment in which it is positioned; at least one energy system comprising at least one solar panel providing energy for the illumination of said warning light, connected with said warning light and located on said first semisphere and positioned so as to be integral with the outer surface of said first semisphere, and at least one battery storing electrical energy obtained by means of said solar panel, connected with said solar panel; at least one control unit connected with said warning light and said energy system, controlling the operation of the warning light and the energy system; at least one air conditioning cabinet located in the inner volume of said second semisphere, in which the battery of said energy system and the control unit are positioned. Accordingly, its novelty is that the said body is made of glass fiber-added composite material.

A possible embodiment of the invention is characterized in that the said illuminated warning sphere comprises a box-shaped air conditioning cabinet in the inner volume of the second semisphere, in which the battery of said energy system and the control unit are positioned, comprising at least one insulating material resistant to weather and environmental conditions, and at least one on-off button connected with said control unit and located on the outer surface of the air conditioning cabinet, which enables the control unit to be activated in order to ensure the operation of said warning light.

A possible embodiment of the invention is characterized in that the said rotation mechanism enables the first semisphere to stand on the upper side after the said illuminated warning sphere is mounted on the energy transmission line wire/wire shield. This ensures that the first semisphere is always in the correct position despite the weather conditions (wind, precipitation, etc.) and vibration in the transmission line.

A possible embodiment of the invention is characterized in that the said rotation mechanism enables the illuminated warning sphere to rotate so that the first semisphere is back on top, even if the illuminated warning sphere rotates due to weather conditions and vibrations in the energy transmission line after the illuminated warning sphere is mounted on the energy transmission line. In this way, the illuminated warning sphere continues to perform its lighting and warning functions.

Another possible embodiment of the invention is characterized in that it comprises an energy system comprising at least two solar panels and at least one battery. Due to the said energy system, it can perform lighting and warning operations in dark weather conditions. The said battery transmits the electrical energy needed by the warning light to the warning light.

Another possible embodiment of the invention is characterized in that it comprises at least one double wedge screwing system (nord-lock) for fixing connection elements such as screws, nuts, washers, and scrappers used at the connection points with the energy transmission line. In this way, the said connection elements will not loosen when exposed to strong winds and vibrations and will not cause displacement or damage.

Another possible embodiment of the invention is characterized in that the control unit comprises at least one GSM module enabling the control unit to send at least one alert to at least one server in the event of a malfunction in the warning light or energy system. In this way, a malfunction of said illuminated warning sphere can be effectively detected.

Another possible embodiment of the invention is characterized in that it comprises at least one heating module and at least one cooling module preferably with peltier, positioned in the said air conditioning cabinet and connected to the said control unit for the said battery to continue to operate in all weather conditions. In this way, it is ensured that the said illuminated warning sphere performs its function in severe weather conditions and the efficiency of the warning light is higher.

### BRIEF DESCRIPTION OF THE FIGURES

Figure 1 shows a perspective view of the illuminated warning sphere of the invention.
Figure 2 shows a representative view of the illuminated warning sphere of the invention in the demounted state.
Figure 3 shows a representative side view of the "A" detail given in Figure 1.
Figure 4 shows a representative side view of the air conditioning cabinet of the illuminated warning sphere of the invention.
Figure 5 shows a representative top view of the air conditioning cabinet of the illuminated warning sphere of the invention.
Figure 6 shows a representative view of the connection of the line holder of the illuminated warning sphere of the invention to the energy transmission line wire.
Figure 7 shows a representative view of the line holder of the illuminated warning sphere of the invention in the demounted state.
Figure 8 shows a representative view of the "B" detail given in Figure 7 in the demounted state.
Figure 9 shows a representative top view of the connection element of the illuminated warning sphere of the invention.
Figure 10 shows the block diagram of the control unit of the illuminated warning sphere of the invention.

### DETAILED DESCRIPTION OF THE INVENTION

In this detailed description, the subject of the invention is explained with examples that do not have any limiting effect only for a better understanding of the subject.

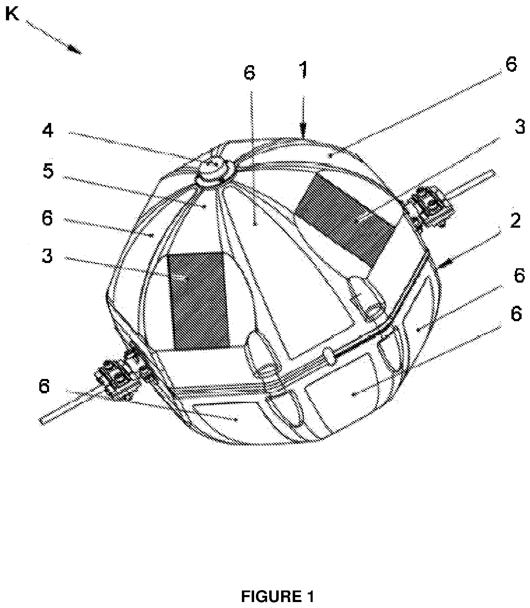

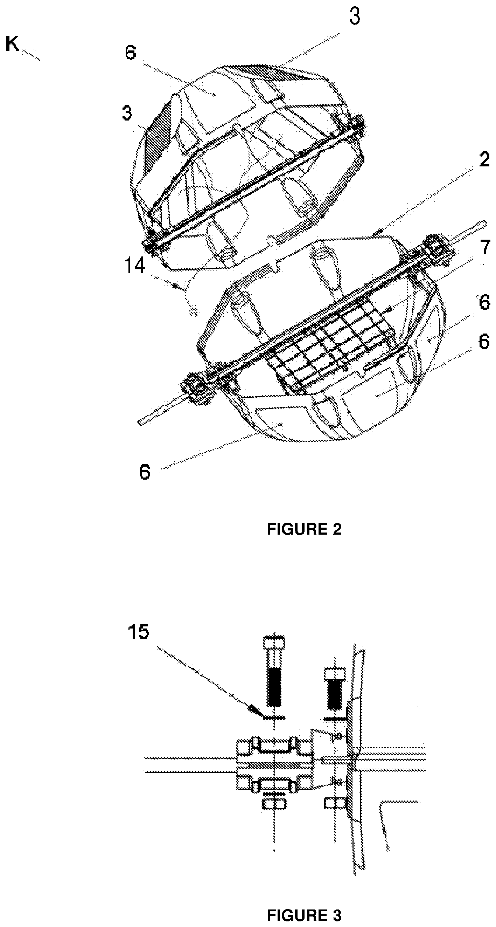

The invention relates to an illuminated warning sphere (K), an exemplary view of which is given in Figure 1 and Figure 2. The illuminated warning sphere (K), which is the subject of the invention, provides lighting for energy transmission lines to minimize weather-related flight risks. The said illuminated warning sphere (K) is suitable for mounting on the top wire/wire shield of the energy transmission line or the top high-voltage towers. The said luminous warning sphere (K) comprises at least one body made of a glass fiber-added composite material comprising at least one first semisphere (1) (upper semisphere) and at least one second semisphere (2) (lower semisphere) connected on one side with said first semisphere (1), and at least two reflector elements (6) located on said first semisphere (1) and second semisphere (2). The said body comprises at least two mutually positioned holes that, when the first semisphere (1) and the second semisphere (2) are joined, enable them to be attached to the wire of the energy transmission line. The illuminated warning sphere (K) also comprises at least one warning light (4) on the first semisphere (1) (preferably at a peak of the first semisphere (1)) and having the feature of flashing to emit light from the outer surface of the said first semisphere (1); at least one solar panel (3) (PV panel) connected to the warning light (4), providing energy for the illumination of said warning light (4) and located on said first semisphere (1), positioned so as to be integral with the outer surface of the first semisphere (1) and at least one energy system including at least one battery (16) connected to said solar panel (3), wherein said solar panel (3) converts solar energy into electrical energy by means of at least one converter (3a) and stores the collected electrical energy; and at least one control unit (17), preferably an electronic control board, connected with said warning light (4) and the energy system, controlling the operation of the warning light (4) and the energy system.

The outer surface of said first semisphere (1) and the outer surface of said second semisphere (5) comprises at least three regions (5) in which said reflector element (6) and said solar panel (3) are to be positioned.

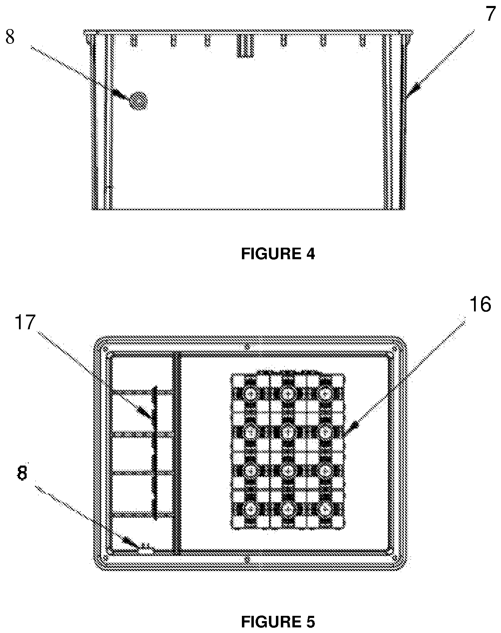

A representative side view of the air conditioning cabinet (7) of the illuminated warning sphere (K) of the invention is presented in Figure 4 and a representative top view is presented in Figure 5. The said illuminated warning sphere (K) comprises a box-shaped air conditioning cabinet (7), which is located in the inner volume of the second semisphere (2) and in which the battery (16) and the control unit (17) of the said energy system are positioned, and which contains at least one insulation material resistant to weather and environmental conditions; and at least one on-off button (8) connected to said control unit (17) and located on the outer surface of the air conditioning cabinet (7), which enables the control unit (17) to be activated to cause the said warning light (4) to operate.

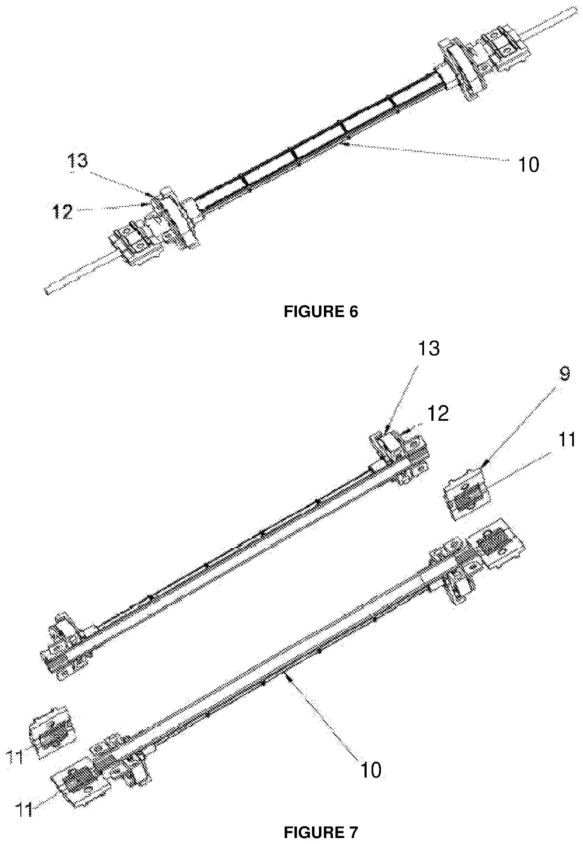

The illuminated warning sphere (K), referred to in a preferred embodiment of the invention, exemplary views of which are shown in Figure 6 and Figure 7, comprises at least one pivoting mechanism which ensures that the first semisphere (1), after being mounted on the transmission line wire/wire shield, remains on the upper side (i.e., the side not facing the ground on which the transmission line pole is positioned). This ensures that the first semisphere (1) is always in the correct position despite the weather conditions (wind, rain, etc.) and vibration on the transmission line.

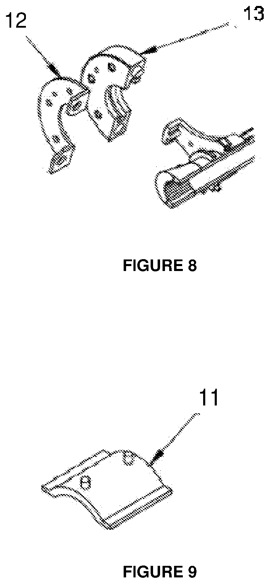

The rotation mechanism comprises at least one clamp (9) and a clamp line holder (10). The said clamp (9) and the clamp line holder (10) are capable of gripping conductors, preferably conductors with diameter values in the range of 11.05-24.6 mm, without damaging them. The said clamp (9) preferably comprises at least one connection element (11) on the inside. The said connection element (11) is shown representatively in Figure 9. The said connection element (11) is made of rubber material.

The said rotation mechanism also comprises at least two sphere paddles (12) which are mounted in the holes formed after the attachment of the first semisphere (1) and the second semisphere (2) and which enable the first semisphere (1) and the second semisphere (2) to be interlocked. The said sphere paddles (12) are positioned on the outer surface of the first semisphere (1) and the second semisphere (2). The said rotation mechanism further comprises at least two rotary bearings (13), connected on one side with the said sphere paddles (12), which enable the clamp line holder (10) to rotate about its axis. The said rotary bearing (13) is positioned on the inner surface of the first semisphere (1) and the second semisphere (2) to remain in the inner volume of the said body. The said sphere paddles (12) and the said rotary bearing (13) are connected by bolts and/or nuts. The de-assembled state of the said sphere paddles (12) and the rotary bearing (13) are shown representatively in Figure 8.

Owing to the said rotation mechanism, even if the illuminated warning sphere (K) rotates due to weather conditions and vibrations in the energy transmission line after it is mounted on the energy transmission line, it is ensured that the illuminated warning sphere (K) rotates so that the first semisphere (1) is back on top. In this way, the illuminated warning sphere (K) continues to perform its illumination and warning functions.

There are four reflector elements (6) on the first semisphere (1) and eight on the second semisphere (2), totaling twelve. The said reflector element (6) is in the form of a label that can be fixed on the first semisphere (1) and the second semisphere (2).

The said warning light (4) is mounted at the top of the first semisphere (1) in such a way that the light it emits into the environment is visible from different directions. The said warning light (4) is a LED light with a density of more than 32 candelas (cd) and a minimum service life of 100000 hours. The said warning light (4) complies with the criteria of the International Civil Aviation Organization (ICAO). The said warning light (4) emits 360 degrees of light to the environment and the distribution of the light it emits is equal in all respects. The said warning light (4) comprises at least one LED chip (4a) that allows the light flux generated to be visible from different directions, and at least one lens that protects the said LED chip (4a) from physical effects (i.e., environmental conditions). The said warning light (4) blinks at least 40 times per minute.

The said second semisphere (2) comprises at least one discharge hole that allows the liquid entering the inner volume to be discharged.

Due to the said energy system, it can perform lighting and warning operations in dark weather conditions. Due to the said solar panel (3), the heat energy emitted by the daylight is converted into electrical energy and the battery (16) (preferably, the battery) is charged. There are 4 said solar panels (3). The said battery (16) is connected to the warning light (4) and transmits to the warning light (4) the electrical energy required by the warning light (4) to emit light. The said battery (16) is a Lithium Iron Phosphate battery with a capacity to meet the energy needs of the illuminated warning sphere (K) for at least 7 days without daylight after being fully charged. In this way, the energy needs of the warning light (4) and therefore the illuminated warning sphere (K) are met in non-solar times.

In a preferred embodiment of the invention, the connection between said control unit (17) and the warning light (4) and the energy system is provided using cables (14). The said cables (14) are manufactured to minimize energy loss.

In a preferred embodiment of the invention, an exemplary view of which is given in figure 3, the said illuminated warning sphere (K) comprises at least one double wedge screwing system (nord-lock) (15) which ensures that the connection elements such as screws, nuts, washers, roundels used at the points of contact with the energy transmission line are fixed in such a way that they do not loosen and cause displacement or damage by loosening when exposed to severe winds and vibrations. The said double wedge screwing system (15), i.e., the locking system, is checked following IEC 61109 and IEC 60383-1.

The said control unit (17) further comprises a table containing battery charge information and warning light operation information corresponding to at least two current-voltage values which enables it to control current-voltage values on the solar panel (3) for charging said battery (16) and for controlling the switching on and off of the warning light (4). For example, when it gets dark, the tension on the solar panel (3) drops. The said control unit (17) controls this voltage drop and starts the flashing of the warning light (4).

The said control unit (17) further comprises at least one power tracking system (MPPT) which monitors the maximum power and allows the electrical energy generated from the solar panel (3) to be used efficiently.

The said control unit (17) further comprises at least one GSM module which enables it to send at least one alert to at least one server in the event of a malfunction of the warning light (4) or the energy system. The said server is preferably a mobile phone, tablet, or laptop. The said alert is an audible, illuminated, or written alert. The said control unit (17) comprises a position module (GPRS) that enables it to transmit the position information of the defective illuminated warning sphere (K) along with the alert sent by the GMS module.

In a preferred embodiment of the invention, the said illuminated warning sphere (K) comprises at least one heating module (18) and at least one cooling module (19), preferably with a peltier, positioned in said air conditioning cabinet (7) and connected to said control unit (17) for the continued operation of said battery (16) in all weather conditions. The said heating module (18) operates for a second period of time with a first period when the temperature value of the battery (16) falls below a first temperature value and switches off when it rises above a second temperature value. Likewise, the said cooling module (19) operates for the fourth period of time with a third period when the temperature value of the battery (16) exceeds a third temperature value and switches off when it falls below a fourth temperature value. In this way, the illuminated warning sphere (K) can operate in severe weather conditions such as -30°C and 45°C.

Herein, the control unit (17) for controlling the operation of the heating module (18) and the cooling module (19) comprises at least one temperature sensor that periodically detects the temperature of the said battery (16). The said control unit (17) further comprises an air conditioning table for controlling the operation of the said heating module (18) and said cooling module (19), comprising said first temperature value, said second temperature value, said third temperature value, and said fourth temperature value, and said operating times corresponding to said temperature values as the first time, the second time, the third time and fourth time.

The said first temperature value is -10°C and below. The said second temperature value is - 5°C and above. The said third temperature value is 40°C and above. The said fourth temperature value is 37°C and below. The said first time is 10 minutes. The said second time is 30 seconds. The said third time is 10 minutes. The said fourth time is 30 seconds.

Herein, the said heating module (18) and cooling module (19) are the circuit elements in the control unit and are protected by an insulation material that is resistant to fire and environmental conditions.

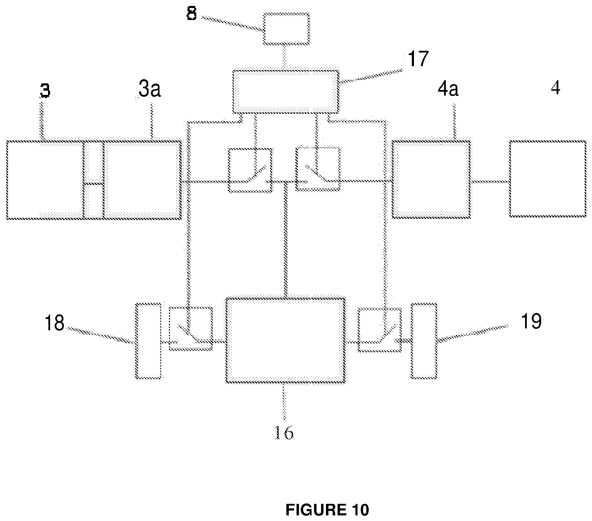

Figure 10 shows a representative block diagram of the operation of the control unit. In an exemplary embodiment of the present invention, the control unit (17) decides the operating mode (day, night) based on the current-voltage values generated by the solar panel (3). If the current-voltage values are high, the control unit (17) controls the charging status of the battery (16) and ensures that it is charged. In case the current-voltage value is low, it ensures that the warning light (4) is activated by transmitting energy from the battery (16) to the warning light (4). Then, the warning light (4) illuminates the area around the energy transmission line where it is positioned by switching on and off 40 times per minute. When the control unit (17) determines an increase in the current-voltage value again, it controls the charging status of the battery (16).

### REFERENCE NUMBERS GIVEN IN THE FIGURE

- K: Illuminated warning sphere
- 1: First semisphere
- 2: Second semisphere
- 3: Solar panel
- 3a: Converter
- 4: Warning light
- 4a: LED chip
- 5: Region
- 6: Reflector element
- 7: Air conditioning cabinet
- 8: Button
- 9: Clamp
- 10: Clamp line holder
- 11: Connection element
- 12: Sphere paddles
- 13: Rotary bearing
- 14: Cables
- 15: Double wedge screwing system
- 16: Battery
- 17: Control unit
- 18: Heating module
- 19: Cooling module

## Claims

1. An illuminated warning sphere (K) suitable for use in energy transmission lines, wherein it comprises;
- at least one body comprising at least one first semisphere (1), at least one second semisphere (2) connected by one side to the said first semisphere (1), wherein the at least one body is made of glass fiber-added composite material and has at least two holes for connecting to the energy transmission line,
- at least one warning light (4) on the said first semisphere (1),
- at least one energy system connected to the said warning light (4), comprising at least one solar panel (3) on the said first semisphere (1) and at least one battery (16) which is connected to the said solar panel (3) and in which electrical energy obtained by the solar panel (3) is stored,
- at least one control unit (17) connected to the said warning light (4) and the energy system, **characterized by**
- at least one air conditioning cabinet (7) positioned in the inner volume of the second semisphere (2), in which the battery (16) and the control unit (17) of the energy system are positioned.

2. An illuminated warning sphere (K) according to claim 1, **characterized in that** it comprises at least one rotation mechanism that allows the said first semisphere (1) to stand on an upper side.

3. An illuminated warning sphere (K) according to claim 2, **characterized in that** the said rotation mechanism comprises at least one clamp (9) and a clamp line holder (10).

4. An illuminated warning sphere (K) according to claim 3, **characterized in that** the said clamp (9) comprises at least one connection element (11).

5. An illuminated warning sphere (K) according to claims 2 or 3, **characterized in that** the said rotation mechanism comprises at least two sphere paddles (12), which are mounted in the holes formed after the said first semisphere (1) and the said second semisphere (2) are connected, to be positioned on the outer surface of the first semisphere (1) and the second semisphere (2) and enabling the first semisphere (1) and the second semisphere (2) to be interlocked.

6. An illuminated warning sphere (K) according to claim 5, **characterized in that** the said rotation mechanism comprises at least two rotary bearings (13) positioned on the inner surface of the first semisphere (1) and the second semisphere (2) to remain in the inner volume of the said body, connected by one side to the said sphere paddles (12) and enabling the clamp line holder (10) to rotate around its axis.

7. An illuminated warning sphere (K) according to claim 1, **characterized in that** the said second semisphere (2) comprises at least one discharge hole that discharges the liquid entering the inner volume.

8. An illuminated warning sphere (K) according to claim 1, **characterized in that** the said control unit (17) comprises at least one GSM module which enables it to send at least one alert to at least one server in the event of a malfunction of the warning light (4) or the energy system.

9. An illuminated warning sphere (K) according to claim 8, **characterized in that** the said control unit (17) comprises a position module for transmitting the position information of the defective illuminated warning sphere (K) along with the alert sent by the GSM module.

10. An illuminated warning sphere (K) according to any one of the preceding claims, **characterized in that** it comprises at least one heating module (18) and at least one cooling module (19) positioned in the said air conditioning cabinet (7) and connected to the said control unit (17).

11. An illuminated warning sphere (K) according to claim 10, **characterized in that** the said control unit (17) comprises at least one temperature sensor that periodically detects the temperature of the said battery (16) to control the operation of the heating module (18) and the cooling module (19).

12. An illuminated warning sphere (K) according to claim 1, **characterized in that** the said warning light (4) is positioned on the top of the first semisphere (1).

13. An illuminated warning sphere (K) according to any one of the preceding claims, **characterized in that** the said air conditioning cabinet (7) comprises at least one insulating material.

## Patentansprüche

1. Beleuchtete Warnkugel (K), die für den Einsatz in Energieübertragungsleitungen geeignet ist,
wobei sie umfasst:
- mindestens einen Körper, der mindestens eine erste Halbkugel (1), mindestens eine zweite Halbkugel (2), die an einer Seite mit der ersten Halbkugel (1) verbunden ist, umfasst, wobei mindestens ein Körper aus einem mit Glasfasern verstärkten Verbundwerkstoff besteht und mindestens zwei Öffnungen zur Verbindung mit der Energieübertragungsleitung aufweist,
- mindestens eine Warnleuchte (4) auf der ersten Halbkugel (1),
- mindestens ein mit der Warnleuchte (4) verbundenes Energiesystem, das mindestens ein Solarpanel (3) auf der ersten Halbkugel (1) und mindestens eine mit dem Solarpanel (3) verbundene Batterie (16) umfasst, in der die vom Solarpanel (3) gewonnene elektrische Energie gespeichert wird,
- mindestens eine Steuereinheit (17), die mit der Warnleuchte (4) und dem Energiesystem verbunden ist, **gekennzeichnet durch**
- mindestens ein Klimatisierungsgehäuse (7), der im Innenvolumen der zweiten Halbkugel (2) angeordnet ist und in dem die Batterie (16) und die Steuereinheit (17) des Energiesystems untergebracht sind.

2. Beleuchtete Warnkugel (K) nach Anspruch 1, **dadurch gekennzeichnet, dass** sie mindestens einen Drehmechanismus umfasst, der es der ersten Halbkugel (1) ermöglicht, auf einer Oberseite zu stehen.

3. Beleuchtete Warnkugel (K) nach Anspruch 2, **dadurch gekennzeichnet, dass** der Drehmechanismus mindestens eine Klemme (9) und einen Klemmenlinienhalter (10) umfasst.

4. Beleuchtete Warnkugel (K) nach Anspruch 3, **dadurch gekennzeichnet, dass** die Klemme (9) mindestens ein Verbindungselement (11) umfasst.

5. Beleuchtete Warnkugel (K) nach Anspruch 2 oder 3, **dadurch gekennzeichnet, dass** der Drehmechanismus mindestens zwei Kugelpaddel (12) umfasst, die in den Öffnungen angebracht sind, die nach dem Verbinden der ersten Halbkugel (1) und der zweiten Halbkugel (2) gebildet werden, um an der Außenfläche der ersten Halbkugel (1) und der zweiten Halbkugel (2) positioniert zu werden und ein Ineinandergreifen der ersten Halbkugel (1) und der zweiten Halbkugel (2) zu ermöglichen.

6. Beleuchtete Warnkugel (K) nach Anspruch 5, **dadurch gekennzeichnet, dass** der Drehmechanismus mindestens zwei Drehlager (13) umfasst, die an der Innenfläche der ersten Halbkugel (1) und der zweiten Halbkugel (2) so positioniert sind, dass sie im Innenvolumen des Körpers verbleiben, an einer Seite mit den Kugelpaddeln (12) verbunden sind und es dem Klemmlinienhalter (10) ermöglichen, sich um seine Achse zu drehen.

7. Beleuchtete Warnkugel (K) nach Anspruch 1, **dadurch gekennzeichnet, dass** die zweite Halbkugel (2) mindestens eine Entleerungsöffnung aufweist, die die in das Innenvolumen eintretende Flüssigkeit entleert.

8. Beleuchtete Warnkugel (K) nach Anspruch 1, **dadurch gekennzeichnet, dass** die Steuereinheit (17) mindestens ein GSM-Modul umfasst, das es ihr ermöglicht, im Falle einer Fehlfunktion der Warnleuchte (4) oder des Energiesystems wenigstens eine Warnmeldung an mindestens einen Server zu senden.

9. Beleuchtete Warnkugel (K) nach Anspruch 8, **dadurch gekennzeichnet, dass** die Steuereinheit (17) ein Positionsmodul umfasst, um die Positionsinformationen der defekten beleuchteten Warnkugel (K) zusammen mit der vom GSM-Modul gesendeten Warnmeldung zu übertragen.

10. Beleuchtete Warnkugel (K) nach einem der vorstehenden Ansprüche, **dadurch gekennzeichnet, dass** sie mindestens ein Heizmodul (18) und mindestens ein Kühlmodul (19) umfasst, die in dem Klimatisierungsgehäuse (7) angeordnet und mit der Steuereinheit (17) verbunden sind.

11. Beleuchtete Warnkugel (K) nach Anspruch 10, **dadurch gekennzeichnet, dass** die Steuereinheit (17) mindestens einen Temperatursensor umfasst, der periodisch die Temperatur der Batterie (16) erfasst, um den Betrieb des Heizmoduls (18) und des Kühlmoduls (19) zu steuern.

12. Beleuchtete Warnkugel (K) nach Anspruch 1, **dadurch gekennzeichnet, dass** die Warnleuchte (4) auf der Oberseite der ersten Halbkugel (1) positioniert ist.

13. Beleuchtete Warnkugel (K) nach einem der vorstehenden Ansprüche, **dadurch gekennzeichnet, dass** das Klimatisierungsgehäuse (7) mindestens ein Isoliermaterial umfasst.

## Revendications

1. Une sphère d'avertissement lumineuse (K) appropriée pour une utilisation dans les lignes de transport d'énergie,
dans lequel elle comprend;
- au moins un corps comprenant au moins une première demi-sphère (1), au moins une deuxième demi-sphère (2) reliée par un côté à ladite première demi-sphère (1), dans lequel au moins un corps est constitué d'un matériau composite à base de fibres de verre et comporte au moins deux trous pour la connexion à la ligne de transport d'énergie,
- au moins un voyant d'avertissement (4) sur ladite première demi-sphère (1),
- au moins un système énergétique relié audit voyant d'avertissement (4), comprenant au moins un panneau solaire (3) sur ladite première demi-sphère (1) et au moins une batterie (16) reliée audit panneau solaire (3) et dans laquelle est stockée l'énergie électrique obtenue par le panneau solaire (3),
- au moins une unité de commande (17) reliée audit voyant d'avertissement (4) et au système énergétique, **caractérisée par**
- au moins une armoire de climatisation (7) positionnée dans le volume intérieur de la deuxième demi-sphère (2), dans laquelle sont positionnés la batterie (16) et l'unité de commande (17) du système énergétique.

2. Une sphère d'avertissement lumineuse (K) selon la revendication 1, **caractérisée en ce qu'**elle comprend au moins un mécanisme de rotation qui permet à ladite première demi-sphère (1) de se tenir debout sur un côté supérieur.

3. Une sphère d'avertissement lumineuse (K) selon la revendication 2, **caractérisée en ce que** ledit mécanisme de rotation comprend au moins une pince (9) et un support de ligne de pince (10).

4. Une sphère d'avertissement lumineuse (K) selon la revendication 3, **caractérisée en ce que** ladite pince (9) comprend au moins un élément de connexion (11).

5. Une sphère d'avertissement lumineuse (K) selon les revendications 2 ou 3, **caractérisée en ce que** ledit mécanisme de rotation comprend au moins deux pales sphériques (12), qui sont montées dans les trous formés après que ladite première demi-sphère (1) et ladite seconde demi-sphère (2) ont été reliées, de manière à être positionnées sur la surface extérieure de la première demi-sphère (1) et de la seconde demi-sphère (2) et à permettre le verrouillage de la première demi-sphère (1) et de la seconde demi-sphère (2).

6. Une sphère d'avertissement lumineuse (K) selon la revendication 5, **caractérisée en ce que** ledit mécanisme de rotation comprend au moins deux paliers rotatifs (13) positionnés sur la surface interne de la première demi-sphère (1) et de la seconde demi-sphère (2) de manière à rester dans le volume interne dudit corps, reliés d'un côté auxdites pales sphériques (12) et permettant au support de ligne de pince (10) de tourner autour de son axe.

7. Une sphère d'avertissement lumineuse (K) selon la revendication 1, **caractérisée en ce que** ladite deuxième demi-sphère (2) comprend au moins un trou d'évacuation qui évacue le liquide pénétrant dans le volume intérieur.

8. Une sphère d'avertissement lumineuse (K) selon la revendication 1, **caractérisée en ce que** ladite unité de commande (17) comprend au moins un module GSM qui lui permet d'envoyer au moins une alerte à au moins un serveur en cas de dysfonctionnement du voyant d'avertissement (4) ou du système d'énergie.

9. Une sphère d'avertissement lumineuse (K) selon la revendication 8, **caractérisée en ce que** ladite unité de commande (17) comprend un module de position pour transmettre les informations de position de la sphère d'avertissement lumineuse défectueuse (K) avec l'alerte envoyée par le module GSM.

10. Une sphère d'avertissement lumineuse (K) selon l'une quelconque des revendications précédentes, **caractérisée en ce qu'**elle comprend au moins un module de chauffage (18) et au moins un module de refroidissement (19) positionnés dans ladite armoire de climatisation (7) et reliés audit unité de commande (17).

11. Une sphère d'avertissement lumineuse (K) selon la revendication 10, **caractérisée en ce que** ladite unité de commande (17) comprend au moins un capteur de température qui détecte périodiquement la température de ladite batterie (16) afin de commander le fonctionnement du module de chauffage (18) et du module de refroidissement (19).

12. Une sphère d'avertissement lumineuse (K) selon la revendication 1, **caractérisée en ce que** ledit voyant d'avertissement (4) est positionné sur le sommet de la première demi-sphère (1).

13. Une sphère d'avertissement lumineuse (K) selon l'une quelconque des revendications précédentes, **caractérisée en ce que** ladite armoire de climatisation (7) comprend au moins un matériau isolant.
